(19) **Europäisches Patentamt**
**European Patent Office**
**Office européen des brevets**

(11) **EP 3 127 885 B1**

(12) **EUROPEAN PATENT SPECIFICATION**

(45) Date of publication and mention
of the grant of the patent:
**22.04.2020   Bulletin 2020/17**

(51) Int Cl.:
***C04B 28/02*** *(2006.01)*     ***C04B 20/02*** *(2006.01)*

(21) Application number: **16159531.9**

(22) Date of filing: **09.03.2016**

(54) **CEMENT COMPOSITE MATERIAL WITH INHOMOGENEOUS TEXTILE CRUSHED PIECES**

ZEMENTVERBUNDSTOFF MIT INHOMOGENEM TEXTILSCHROT

MATÉRIAU COMPOSITE À BASE DE CIMENT AVEC DES PIÈCES DE TEXTILE BROYÉES HÉTÉROGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2015   CZ 20150542**

(43) Date of publication of application:
**08.02.2017   Bulletin 2017/06**

(73) Proprietor: **Ceske vysoke uceni technicke v Praze 160 00 Praha 6 - Dejvice (CZ)**

(72) Inventors:
• **VODICKA, Jan**
  **16000 Praha 6 (CZ)**
• **SEPS, Karel**
  **47141 Dubá (CZ)**
• **FLÁDR, Josef**
  **272 01 Kladno (CZ)**
• **PLESNÍK, Juraj**
  **90701 Myjava (SK)**

(74) Representative: **Kratochvil, Vaclav Patent and Trademark Office P.O. Box 26 295 01 Mnichovo Hradiste (CZ)**

(56) References cited:
**EP-A1- 0 863 114       EP-A1- 2 279 987**
**WO-A1-93/16009        WO-A1-2008/142107**
**WO-A2-2010/067135     CN-A- 101 407 390**
**CZ-B6- 300 195        DE-A1- 2 929 925**
**DE-A1- 4 407 329       DE-A1- 4 439 656**
**DE-A1- 19 648 096      DE-C1- 4 227 996**
**DE-C1- 19 511 278      JP-A- 2001 323 435**
**NL-C2- 1 034 887       US-B1- 6 875 265**

• **ROSSETTI V A ET AL: "Production of aggregate from non-metallic automotive shredder residues", JOURNAL OF HAZARDOUS MATERIALS, ELSEVIER, AMSTERDAM, NL, vol. 137, no. 2, 21 September 2006 (2006-09-21), pages 1089-1095, XP027885222, ISSN: 0304-3894 [retrieved on 2006-09-21]**
• **DATABASE WPI Week 201203 Thomson Scientific, London, GB; AN 2011-Q60067 XP002765176, -& CN 102 241 492 A (UNIV TAIYUAN TECHNOLOGY) 16 November 2011 (2011-11-16)**

Remarks:
The file contains technical information submitted after the application was filed and not included in this specification

**Description**

Background of the Invention

Presented solution deals with a new building material exploiting secondary raw materials. It means inhomogeneous shredded textile waste, possibly recycled concrete, which can be used as an aggregate. Resulting material features sufficient mechanical properties that allow to use it as a construction material for less demanding and low-rise buildings.

Description of Prior Art

Composite materials with cement matrix are a widely used building material, both due to their easy manufacture, and due to easy adjustment of their mechanical properties, such as tensile strength.

At present we know cement composite materials fully replacing natural aggregate with recycled concrete, while their structure is reinforced with synthetic fibers. This composite, which is currently manufactured from one fraction of recycled concrete, features high void ratio 25-60% depending on the size of the maximum grain of the given recycled concrete. Mechanical properties of the composite depend in particular on the amount of weight dosage of fibers reinforcing the composite structure. Manufacture of most of the fibers used for adjustment of the mechanical properties is complex and cost demanding, which negatively impacts the resulting composite price.

Textile materials are added to the concrete in the form of aligned woven textiles with clearly defined properties where the textiles are interlaced by concrete layers. Number of layers and their material vary depending on required final properties. Final composites however feature high price and therefore they are not commonly used in current design practice.

Another exploitation of textile materials is their use in cement composites with natural or artificial aggregates with fraction 0-8, high dosages of silicate cement, water and plasticizer. Disadvantage of this material is its higher price due to required higher dosages of cement bond and plasticizers as well as its low bulk density, which compromises the material with respect to thermal accumulation.

Inhomogeneous shredded textile waste is used for acoustic insulations or as a reinforcement of cement structure in concretes with continuous grain size curve. In these concretes its usage is questionable; the reason is that as a result of replacement of aggregate with textiles strength characteristics of final composite are compromised.

Document WO 2008/142107 A1 discloses a concrete which was obtained from a mixture of cement, aggregate, granulated filler and water. The granulated filler is preferably made from a material mixture of i.) shredded waste material which comprises 7 - 12 wt% of fibers (average length 2 mm), 25 - 40 wt% thermoplast, 15 - 25 wt% elastomer, 3 - 8 wt% inorganic additive of particle size <= 400 um. The waste may result from old cars.

Document CZ 300 195 B6 discloses a concrete made from a mixture of 240 - 400 kg cement, 1100 to 1800 kg recycled aggregate 0-16, 0-22, 0-32, 0-63, 4,5-18 kg of synthetic fibers, 140-350 kg of water. The recycled filling agent is comprised of inert components of brick and/or concrete recyclates and/or fractions of natural stone and/or small-size recyclate waste.

Summary of the Invention

Disadvantages of present solutions are removed by the cement composite material with inhomogeneous shredded textile waste, which has a voided structure and it consists of silicate cement, aggregate, shredded textile waste formed according to PP 50057-2012 by clumps of tufts composed mainly of non-textile particles interwoven with textile fibers, and/or it consists of combined textile/non-textile material and hardened textiles, and mixing water. Its principle is that it contains only four basic ingredients, specifically silicate cement in a weight dosage 260 to 400 kg/m$^3$, aggregate of single unsorted fraction from the group 0-16, 0-22, 0-32 in a weight dosage 1400 kg/m$^3$ to 2100kg/m$^3$, dosage of inhomogeneous shredded textile waste in the range from 10 to 80 kg/m$^3$. Water coefficient ranges from 0.25 to 0.4 depending on the aggregate water content and on requirements for workability of the composite, which corresponds to the weight dosage of mixing water from 65 to 160 kg/m$^3$.

Dimensions of the shredded textile waste are comparable with the maximum grain size of the applied aggregate fraction, while the dosage of the shredded textile waste is determined by the formula

$$m = \rho \times V$$

where:

m is the weight of the shredded textile waste,
$\rho$ is the bulk density of the shredded textile waste,
V is 50 to 100% of the volume of voids of the aggregate.

In one possible preferred embodiment the shredded textile waste is formed by waste materials from worn-out and/or redundant parts of products used in transportation vehicles.

In a preferred embodiment the aggregate is the concrete recycled aggregate or other secondary raw material, such as crushed bricks, slag aggregate.

Voided-structure cement composite, which is the subject of the presented patent application, has a fixed structure when compacted. The structure is formed by the aggregate grains, it is stable and capable to resist external loads, both mechanical, as well as the impacts of the environment. Low dosage of silicate cement together with the determined weight dosage of the shredded textile waste considerably reduces volume changes of the voided-structure cement composite as opposed to changes in the cement composites with filled-up structure, which can be considered as the benefit of the composite material created according to this patent application.

Detailed Description of the Preferred Embodiments

Cement composite material with inhomogeneous shredded textile waste, which has a voided structure and consists of silicate cement, aggregate, shredded textile waste and mixing water. The composite contains cement in a weight dosage 260 to 400 kg/m$^3$, aggregate of single unsorted fraction from the group 0-16, 0-22, 0-32 in a weight dosage 1400 kg/m$^3$ to 2100kg/m$^3$, dosage of inhomogeneous shredded textile waste in the range from 10 to 80 kg/m$^3$, and mixing water in the dosage from 65 to 160 kg/m$^3$. Preferably shall be used the inhomogeneous shredded textile waste according to PP 50057-2012 formed by clumps of tufts composed mainly of non-textile particles interwoven with textile fibers, and/or combined textile/non-textile material and hardened textiles from worn-out and/or redundant parts of products used in transportation vehicles. Dimensions of the shredded textile waste shall be comparable with the maximum grain size of the applied aggregate fraction. Dosage of the shredded textile waste is determined by the formula

$$m = \rho \times V$$

where

m is the weight of the shredded textile waste,
$\rho$ is the bulk density of the shredded textile waste,
V is 50 to 100% of the volume of voids of the aggregate.

Voided structures of cement composites with 100% replacement of natural aggregate with recycled materials are more suitable for determining the dosage of shredded textile waste. These composites have a discontinued grain size curve and therefore voids are formed throughout the whole volume.

The voids allow mixing of the shredded textile waste of natural or synthetic origin, possibly combination of both, and thus a new building material can be obtained. Shredded textile waste will not decrease the bulk densities of voided-structure composites as it happens with composites with continuous grain size curve. Using the shredded textile waste significantly improves the material's insulation characteristics against noise, partially against temperature and even fire provided that the shredded textile waste is obtained from textiles used in the automotive industry.

Each crushed piece of the shredded textile waste produced by crushing the waste textiles from cars has fibers jutting out, which improve their bond with the aggregate grains, and therefore it is advantageous to use this source. Owing to this fact the shredded textile waste partially overtakes the function of otherwise commonly used synthetic fibers for fiber concrete with recycled materials. Everything is subject to the weight dosage of the shredded textile waste and the aggregate grain size. As tests performed so far have shown, this replacement may reach up to 40 - 60% of the effect delivered by the synthetic fibers, it means mechanical properties to be proved for voided-structure cement composites using recycled aggregate with their structure reinforced by synthetic fibers. Replacement of synthetic fibers with shredded textile waste represents lower financial demands because synthetic fibers are the most expensive component of cement composites.

Formula example 1:

|  | [kg/m$^3$] |
| --- | --- |
| CEM I 42,5 R | 300 |

(continued)

|  | [kg/m³] |
|---|---|
| Aggregate from recycled concrete 0-22 | 1400 |
| Shredded textile waste | 29.5 |
| Water | 93 |

Results in compressive strength

| Sample No. | Dimension [mm] | Weight [g] | Force [kN] | Bulk density [kg/M³] | Strength [MPa] |
|---|---|---|---|---|---|
| S2.1 | 100.22 | | | | |
| | 101.1 | | | | |
| | 100.2 | 1525 | 49.21 | 1502 | 4.86 |
| S2.2 | 100.16 | | | | |
| | 101.5 | | | | |
| | 99.86 | 1450 | 41.66 | 1428 | 4.11 |
| S2.3 | 100.16 | | | | |
| | 100.2 | | | | |
| | 100.1 | 1500 | 45.94 | 1493 | 4.58 |
| Mean value | | 1492 | | 1475 | 4.52 |

Results in flexural tensile strength with four-points support

| Sample No. | Dimension [mm] | Weight [g] | Force [kN] | Bulk density [kg/m³] | Strength [MPa] |
|---|---|---|---|---|---|
| S2.1 | 400 | | | | |
| | 100.2 | 6505 | 3.12 | 1616 | 0.93 |
| | 100.45 | | | | |
| S2.2 | 400 | | | | |
| | 103.5 | 6585 | 3.11 | 1583 | 0.87 |
| | 100.45 | | | | |
| S2.3 | 400 | | | | |
| | 101.1 | 6500 | 2.49 | 1601 | 0.73 |
| | 100.4 | | | | |
| Mean value | | 6530 | | 1600 | 0.84 |

Formula example 2:

|  | [kg/m³] |
|---|---|
| CEM I 42,5 R | 300 |
| Aggregate from recycled concrete 0-16 | 1400 |
| Shredded textile waste | 59 |

(continued)

|  | [kg/m$^3$] |
|---|---|
| Water | 93 |

Results in compressive strength at the remaining pieces of beams

| Sample No. | Dimension [mm] | Force [kN] | Strength [MPa] |
|---|---|---|---|
| S.2.1 | 99.75 | 24.82 | 2.48 |
|  | 100.4 |  |  |
| S.2.2 | 99.6 | 30.26 | 3.02 |
|  | 100.5 |  |  |
| S.2.3 | 103.3 | 21.6 | 2.08 |
|  | 100.4 |  |  |
| Mean value |  |  | 2.53 |

Results in flexural tensile strength with four-points support

| Sample No. | Dimension [mm] | Weight [g] | Force [kN] | Bulk density [kg/m$^3$] | Strength [MPa] |
|---|---|---|---|---|---|
| S.2.1 | 400 | 5430 | 2.64 | 1355 | 0.79 |
|  | 99.75 |  |  |  |  |
|  | 100.4 |  |  |  |  |
| S.2.2 | 400 | 5495 | 1.46 | 1372 | 0.44 |
|  | 99.6 |  |  |  |  |
|  | 100.5 |  |  |  |  |
| S.2.3 | 400 | 5150 | 1.91 | 1241 | 0.53 |
|  | 103.3 |  |  |  |  |
|  | 100.4 |  |  |  |  |
| Mean value |  | 5358 |  | 1323 | 0.59 |

Formula example 3:

|  | [kg/m$^3$] |
|---|---|
| CEM I 42,5 R | 400 |
| Aggregate from recycled concrete 0-16 | 1400 |
| Shredded textile waste | 29.5 |
| Water | 93 |

Compressive strength at the remaining pieces of beams

| Sample No. | Dimension [mm] | Force [kN] | Strength [MPa] |
|---|---|---|---|
| B1.1 | 99<br>100 | 57.02 | 5.76 |
| B1.2 | 98.16<br>99.9 | 40.96 | 4.18 |
| B1.3 | 103.8<br>100 | 35.93 | 3.46 |
| B1.4 | 99.09<br>100 | 42.8 | 4.32 |
| Mean value | | | 4.43 |

Results in flexural tensile strength with four-points support

| Sample No. | Dimension [mm] | Weight [g] | Force [kN] | Bulk density [kg/m$^3$] | Strength [MPa] |
|---|---|---|---|---|---|
| B1.1 | 400<br>99<br>100.21 | 6350 | 3.29 | 1600 | 0.99 |
| B1.2 | 400<br>98.16<br>99.9 | 6585 | 2.94 | 1679 | 0.92 |
| B1.3 | 400<br>103.8<br>101.51 | 6495 | 3.86 | 1541 | 1.06 |
| B1.4 | 400<br>99.09<br>100.77 | 6510 | 2.19 | 1630 | 0.66 |
| Mean value | | 6485 | | 1613 | 0.91 |

Industrial Applicability

Material characteristics of the composite, which is the subject of this patent application, allow to use it in concrete construction engineering, in particular in its areas where the demands for compressive strength are not too high but where other properties are required, for example tensile strength or improved acoustic parameters. Composite materials may be used in civil engineering manufacture both for manufacture of building blocks used for construction of supporting structures of undemanding building objects, or for direct concreting of supporting elements. The proposed composite material features physical and mechanical properties usable for constructing the supporting structures of civil buildings as an alternative material to traditional brickwork.

Industrial exploitation of this new material is supported also by the fact that the manufacture is rather simple, it can be implemented at common manufacturing plants without the need of specialized technology, and its price is very low thanks to exploitation of secondary raw materials.

**Claims**

1. Cement composite material with inhomogeneous shredded textile waste, the cement composite material featuring a voided structure and consisting of silicate cement, aggregate, shredded textile waste formed by the clumps of tufts composed in particular of non-textile particles interwoven with textile fibers and/or combined textile/non-textile material and hardened textiles, and of mixing water **characterized by the fact that** it contains

   - silicate cement in a weight dosage 260 to 400 kg/m$^3$,
   - aggregate of single unsorted fraction from the group 0-16, 0-22, 0-32 in a weight dosage 1400 kg/m$^3$ to 2100 kg/m$^3$,
   - dosage of inhomogeneous shredded textile waste in the range from 10 to 80 kg/m$^3$, and
   - mixing water in the dosage from 65 to 160 kg/m$^3$,

   where the dimensions of the shredded textile waste are comparable with the maximum grain size of the applied aggregate fraction, while the dosage of the shredded textile waste is determined by the formula

   $$m = \rho \times V$$

   where

   - m is the weight of the shredded textile waste,
   - $\rho$ is the bulk density of the shredded textile waste,
   - V is 50 to 100 % of the volume of voids of the aggregate.

2. Cement composite material according to claim 1 **characterized by the fact that** the shredded textile waste is formed by waste materials from worn-out and/or redundant parts of products used in transportation vehicles.

3. Cement composite material according to claim 1 or 2 **characterized by the fact that** the aggregate is the concrete recycled aggregate or other secondary raw material, such as crushed bricks, slag aggregate.

**Patentansprüche**

1. Zementkomposit mit heterogenen Textilflocken, Zementkomposit hat eine lückenartige Struktur und umfasst Silikatzement, Splitt, Textilflocken, gebildet aus Büschelansammlungen, bestehend insbesondere aus nicht textilen Teilchen, durchflochten durch Textilfaser und/oder aus kombiniertem Textilnicht Textilmaterial und gehärtetem Gewebe, und aus Zugabewasser, **gekennzeichnet dadurch, dass** es umfasst

   - Silikatzement in Gewichtsdosis von 260 bis 400 kg/m$^3$,
   - Splitt einer unsortierten Fraktion der Gruppen 0-16, 0-22, 0-32 in Gewichtsdosis von 1400 kg/m$^3$ bis 2100 kg/m$^3$,
   - Dosis von heterogenen Textilflocken im Bereich von 10 bis 80 kg/m$^3$ und Zugabewasser in Dosis von 65 bis 160 kg/m$^3$

   wo die Abmessungen der Textilflocken mit der Maximalgröße des Splitts der verwendeten Fraktion vergleichbar sind, wobei die Dosis der Textilflocken durch folgendes Verhältnis gegeben ist

   $$m = \rho \times V$$

   wo

   - m das Gewicht der Textilflocken ist,
   - $\rho$ die Dichte der Textilflocken ist,
   - V ist 50 bis 100 % der Gesamtlücken des Splitts.

**2.** Zementkomposit nach Anspruch 1 **gekennzeichnet dadurch, dass** die Textilflocken aus dem Abfall von gebrauchten und/oder Restproduktenteilen bestehen, die in Verkehrsmitteln verwendet werden.

**3.** Zementkomposit nach Anspruch 1 oder 2 **gekennzeichnet dadurch, dass** der Splitt ein recycelter Betonsplitt oder ein anderer Sekundärrohstoff wie beispielsweise Ziegelsplitt, Schlackensplitt ist.

**Revendications**

**1.** Ciment composite comprenant le broyat des textiles variés, ce ciment composite de structure poreuse est composé du ciment de silicate, du granulat, du broyat des textiles constitué notamment des groupes de touffes de particules non textiles tressées avec des fibres textiles et/ou d'un matériau textile et non textile combiné et du textile renforcé, et de l'eau de gâchage, **caractérisé en ce qu'**il contient

- une dose du ciment de silicate dont le poids est compris entre 260 et 400 kg/m$^3$,
- une dose du granulat d'une fraction non triée de famille 0-16, 0-22, 0-32 dont le poids est compris entre 1400 kg/m$^3$ et 2100 kg/m$^3$
- une dose du broyat des textiles variés dont le poids est compris entre 10 et 80 kg/m$^3$ et une dose de l'eau de gâchage représentant entre 65 et 160 kg/m$^3$,
les proportions du broyat des textiles étant en outre comparables à la taille maximale de grain de la fraction du granulat utilisée et la dose du broyat des textiles étant déterminée par la relation

$$m = \rho \times V$$

où

- $m$ est le poids du broyat des textiles,
- $\rho$ est la masse volumique apparente du broyat des textiles,
- $V$ est de 50 à 100 % de la porosité du granulat.

**2.** Ciment composite selon la revendication 1 **caractérisé en ce que** le broyat des textiles est composé des déchets de parties usées et/ou résiduelles des produits utilisés dans les moyens de transport.

**3.** Ciment composite selon la revendication 1 ou 2 **caractérisé en ce que** le granulat est un granulat du béton recyclé ou une autre matière première secondaire, comme les briques broyées ou le laitier granulé.

**EP 3 127 885 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008142107 A1

- CZ 300195 B6